# EUROPÄISCHE PATENTSCHRIFT

(11) **EP 0 515 891 B1**
(45) Veröffentlichungstag und Bekanntmachung des Hinweises auf die Patenterteilung: **05.07.1995**
(21) Anmeldenummer: 92107948.9
(22) Anmeldetag: 12.05.1992
(51) Int. Cl.: C04B 35/52, C04B 35/536

(54) **Verfahren zur Herstellung von Formkörpern aus Blähgraphit**
Process for producing mouldings from expanded graphite
Procédé pour la préparation de corps moulés en graphite expansé

(30) Priorität: 25.05.1991 DE 4117074
(43) Veröffentlichungstag der Anmeldung: 02.12.1992
(73) Patentinhaber: BAYER AG, 51368 Leverkusen (DE)
(72) Erfinder: von Bonin, Wulf, Dr., W-5068 Odenthal-Hahnenberg (DE); von Gizycki, Ulrich, Dr., W-5090 Leverkusen (DE)

(56) Entgegenhaltungen:
- EP-A- 0 445 400
- EP-A- 0 458 150
- DE-A- 2 430 720

## Beschreibung

Die vorliegende Erfindung betrifft eine besonders vorteilhafte Herstellung von Formkörpern aus Blähgraphiten.

Es ist bekannt, Formkörper mit geringen Raumgewichten herzustellen, indem man Blähgraphit in geschlossene Formen einbringt und in diesen auf Temperaturen über 180°C erhitzt.

Dabei expandiert der Blähgraphit und füllt die Form aus. Dieses Verfahren hat jedoch den Nachteil, daß der in schuppiger Form vorliegende Blähgraphit in komplizierteren Formen nur schwierig längere Expansionswege zurücklegen kann. Das hat zur Folge, daß die Formen bei der Expansion nur unvollständig ausgefüllt werden, die entstehenden Formteile an verschiedenen Stellen stark unterschiedliche Raumgewichte aufweisen und die Wände der Formen unterschiedlichen Drucken ausgesetzt werden, was zu Deformierungen der Form Anlaß geben kann.

Aus EP-A1 445 400 sind intumeszenzfähige Formteile bekannt, die aus Blähgraphit durch Erhitzen in Formen auf 150 bis 350°C hergestellt werden. EP-A1 458 150 betrifft Formteile, die hergestellt wurden durch eine Vorexpansion von Blähgraphit bei 140 bis 450°C bis ein Schüttgewicht von 30 bis 500 g/l erreicht ist, Füllen einer Form zu mindestens 50 Vol.-% damit und anschließendem Erhitzen auf 300 bis 700°C. Beide EP-A1-Schriften haben eine ältere Priorität, sind aber gegenüber der vorliegenden Erfindung nicht vorveröffentlicht.

Es wurde nun ein Verfahren zur Herstellung von Formkörpern aus Blähgraphit gefunden, das dadurch gekennzeichnet ist, daß man Blähgraphit zunächst in ein Vorexpandat überführt, dieses in einer Preßvorrichtung bei Temperaturen unter 180°C zu Vorformlingen verpreßt und aus diesen Vorformlingen durch Erhitzen in Formen auf Temperaturen über 180°C Formkörper herstellt.

Als Blähgraphite für die vorliegende Erfindung kommen Graphite jeglichen Typs in Frage, die beim Erhitzen blähfähig sind. Sie können massiv, gequollen oder auch schon mehr oder weniger teilexpandiert sein und z.B. um 10 bis 800 Volumenprozent und darüber expandieren. Solche Blähgraphite (z.B. sogenannte Graphitsäuren und Graphitsalze) sind bekannt. Es handelt sich dabei im allgemeinen um Graphite, in deren Zwischengitterebenen Fremdatome, Ionen oder Molekülgruppen eingelagert sind. Bevorzugt sind sogenannte NOₓ- und SOₓ-Blähgraphite, die durch Einwirkung von Schwefel-oder Salpetersäure auf Graphit herstellbar sind, gegebenenfalls in Gegenwart eines Oxidationsmittels (z.B. H₂O₂). Auch auf elektrochemischem Weg können gegebenenfalls geeignete Blähgraphite erhalten werden.

Die Blähgraphite können als solche, in (teil-)neutralisierter Form und/oder zusammen mit Hilfsstoffen eingesetzt werden. Bei den Hilfsstoffen kann es sich z.B. um Oxidationsstabilisatoren (wie Phosphorsäuren, Borsäuren, deren Ester, deren Amide, Phosphate und/oder Borate), pH-Wert-Stellmittel (etwa Basen oder Basenspender) und/oder Bindemittel handeln. Als Bindemittel kommen z.B. lösliche Metallphosphate, Metallphosphonate und Metallphosphonatvorläufer in Frage, wie sie in der DE-OS 39 12 552 beschrieben sind, aber auch Ammonium- und Aminsalze, vorzugsweise (Poly-)Alkylenpolyaminsalze und Alkanolaminsalze (z.B. Ethanolaminsalze) von Phosphorsäuren (z.B. H₃PO₄), Borsäuren oder von sauren Phosphaten von Metallen der 2. und 3. Gruppe des Periodensystems der Elemente und die weiter unten beschriebenen Zuschlagstoffe, soweit sie Bindemitteleigenschaften haben.

Die Blähgraphite können beispielsweise mittlere größte Korndurchmesser von 0,05 bis 15mm, vorzugsweise von 0,5 bis 5mm, aufweisen.

Die Blähgraphite und/oder die daraus herzustellenden Vorexpandate können gegebenenfalls mit anderen, expansionsfähigen oder nicht expansionsfähigen Zuschlagstoffen vermischt werden. Zuschlagstoffe können z.B. sein:
Perlite, Vermikulite, blähfähige Gläser, Glimmer, Tone, Borsilikate, Kokse, Holzkohlen, Steinkohlen, Braunkohlen, Graphitgranulate, Korkgranulate, Holzgranulate, Getreidekörner, Kork, Rindengranulate, Blähton, Schaumbeton, Metallschwamm, Bims, Tuff und/oder Lava.

Den Blähgraphiten und/oder den daraus herzustellenden Vorexpandaten können in trockener oder feuchter Form, z.B. in Form von wäßrigen Lösungen oder Dispersionen, gegebenenfalls Hilfs-, Füll- und Verstärkungsstoffe zugefügt werden, die sich dann besonders gleichmäßig verteilen lassen.

Bei den Füll- und Verstärkungsstoffen, die gegebenenfalls auch Zuschlagsstoffen sein können, kann es sich beispielsweise um Fasern, Kristallite, Blättchen, Hanteln, Kugeln, Hohlkugeln, Pulver und/oder Granulate der verschiedensten Art handeln, beispielsweise um Metallpulver, Metallspäne, Metallfäden, Gesteinsmehle, Gläser, Emaillfritten, Kreide, Dolomit, Kaolin, Quarz, Oxyde und Hydroxyde des Calciums, Magnesiums, Aluminiums und Eisens, Phosphate, Silikate, Aluminate, Zemente, Gipse, Schlacken, Flugaschen, Kohlen, Kokse, Cellulose, Knochen-, Holz-, Rinden-, Früchte-, Fruchtschalen-, Heu- und Stroh-Zerkleinerungsprodukte und Fruchtkörner von Mais, Hirse und Getreide der verschiedensten Art.

Es kann sich dabei aber auch um Pulver, Lösungen, Emulsionen, Dispersionen oder Aufschlämmungen handeln, die organische und/oder anorganische Salze, wie Salze der verschiedenen Schwefel- und Phosphorsäuren, Borate, Silikate, Aluminate, Formiate, Maleate, Acetate, Citrate und Oleate und/oder nichtionische, kationische und anionische Monomere, Oligomere und Polymere, wie Kohlehydrate (z.B. Melassen, Zucker, Stärken, Cellulosen und deren Abkömmlinge), Kohlenwasserstoffe und deren Abkömmlinge (z.B. Teer, Bitumen, Fette und Wachse), Glykole, Polyole, Polyether, Polyester, natürliche und synthetische Polyamide, Proteine, Kaseine, Chitine, natürliche und synthetische Kautschuke oder andere Elastomere, Homo- und Copolymerisate ungesättigter Kohlenwasserstoffverbindungen (z.B. an sich bekannte Polymer- und Kunststoffdispersionen), Polyurethane, Phenolharze, Furanharze, Harnstoffharze, Melamin-Formaldehyd-Harze, Epoxydharze, ungesättigte Polyesterharze, Polysulfidharze und/oder Polyimidharze enthalten.

Hilfsstoffe, Zuschlagsstoffe, Füllstoffe und Verstärkungsstoffe können im Gemisch mit Blähgraphit und/oder den daraus herzustellenden Vorexpandaten insgesamt z.B. in Mengen von 0 bis 85 Gew.-%, vorzugsweise von 15 bis 60 Gew.-%, vorliegen. Dabei sind auch alle denkbaren Kombinationen von 2 oder mehr dieser Stoffe aus einer Kategorie und alle denkbaren Kombinationen von 2 oder mehr dieser Stoffe aus verschiedenen Kategorien möglich.

Bevorzugt sind Phosphate, Polyphosphate, Kohlehydrate, Kohlen, Kokse, Bitumen-artigen Rückstände, natürliche und/oder synthetische Polymere und/oder Tenside sowie Stoffe mit einer klebenden und/oder verdickenden Wirkung, wie Melasse, Stärke, Polyvinylacetat-Hydrolysate und/oder Acrylamidpolymerisate, die gegebenenfalls auch in Form einer wäßrigen Lösung oder Dispersion eingesetzt werden können.

Es sind wesentliche Merkmale der vorliegenden Erfindung, daß man den eingesetzten Blähgraphit, gegebenenfalls im Gemisch mit anderen Materialien, in ein Vorexpandat überführt und dieses Vorexpandat, gegebenenfalls im Gemisch mit anderen Materialien, in einer Preßvorrichtung bei Temperaturen unter 180°C zu Vorformlingen verpreßt.

Die Vorexpandate kann man erhalten, indem man thermisch eine partielle Expansion des Blähgraphits herbeiführt, sodaß der Blähgraphit bei weiterem Erhitzen noch weiter expandieren kann. Für die Vorexpansion des Blähgraphits können beispielsweise Temperaturen im Bereich 180 bis 450°C, vorzugsweise 180 bis 300°C gewählt werden. Man kann die Vorexpansion durchführen bis beispielsweise 10 bis 95 %, vorzugsweise 30 bis 75 %, der Volumenexpansion erreicht sind, die eintritt, wenn man den Blähgraphit drucklos und solange auf 600°C erhitzt, bis er nicht mehr weiter expandiert.

Die Verpressung des Vorexpandates oder von Vorexpandate enthaltenden Gemischen erfolgt vorzugsweise unter Bedingungen, bei denen keine weitere Expansion des Bähgraphits stattfindet, also beispielsweise bei Temperaturen unter 180°C. Bevorzugt sind Temperaturen im Bereich 10 bis 150°C, insbesondere solche im Bereich 15 bis 100°C. Die Verpressung kann mit feuchtem Vorexpandat vorgenommen werden, das z.B. in Form einer Paste oder eines Feuchtgranulats vorliegt. Bevorzugt ist es jedoch, trockenes Vorexpandat zu verpressen. Die Verpressung kann so durchgeführt werden, daß das Volumen des Vorexpandates oder des Vorexpandate enthaltenden Gemisches beispielsweise um 20 bis 90 % abnimmt. Vorzugsweise beträgt die Volumenabnahme 30 bis 70 %, insbesondere 30 bis 50 %.

In die Verpressung der Vorexpandate zu den Vorformlingen kann man gegebenenfalls Vorexpandate mit unterschiedlichem Schüttgewicht und/oder unterschiedlich zusammengesetzte Vorexpandate einsetzen. Unterschiedliche Vorexpandate können dabei als Gemisch oder in definierter Anordnung zueinander zur Anwendung gelangen. So kann man Vorformlinge und daraus Formkörper erhalten, die an verschiedenen Stellen eine unterschiedliche Dichte und/oder Zusammensetzung aufweisen, also z.B. Sandwichartig strukturiert sind. Man kann gegebenenfalls auch vor der Verpressung in die zu verpressende Masse Verstärkungsmaterialien, beispielsweise in Faserform oder in flächiger Form einlegen, z.B. Metallfolien, Gewebe, Netze, Metallfasern, Kohlenstoffasern, Mineralfasern oder textile Flächengebilde aus Mineral-, Kunststoff- oder natürlichen Fasern.

Man kann den Vorformling gegebenenfalls während oder nach seiner Herstellung auch mit einer Deckschicht abdecken oder überziehen, z.B. aus Metallfolien, Keramikmaterial, Kohlefasern, Mineralfasern, carbonisierenden Materialien, Lacken und/oder Bindemitteln. Der aus dem Vorformling hergestellte Formkörper enhält dann vollständig oder partiell eine derartige Deckschicht.

Der Vorformling kann in der gleichen Form hergestellt werden, in der anschließend durch Erhitzen auf Temperaturen von über 180°C der Formkörper gebildet wird. Man kann zur Herstellung des Vorformlings auch eine andere Form verwenden, beispielsweise eine weniger profilierte und/oder weniger detaillierte Form. Es ist auch möglich aus mehreren, gegebenenfalls verschieden geformten und/oder zusammengesetzten Vorformlingen einen fertigen Formkörper herzustellen. Der Vorformling kann auch vor dem Einbringen in die Form zur Herstellung des Formkörpers zugerichtet, d.h. durch mechanische Bearbeitung in seiner Form verändert werden.

Es ist im allgemeinen vorteilhaft, wenn die Abmessungen des Vorformlings denen des fertigen Formkörpers schon möglichst weitgehend entsprechen, sodaß beim abschließenden Erhitzen im wesentlichen nur noch eine verfestigende Verdichtung erfolgt. Der Vorformling kann auch kleinere Abmessungen als der fertige Formkörper aufweisen. Dann ist zu berücksichtigen, daß beim abschließenden Erhitzen noch ein Expansionsprozeß stattfinden kann, der zur vollständigen Ausfüllung der Form führt.

Aus dem Vorformling kann direkt, z.B. in der gleichen Form und unmittelbar nach seiner Herstellung der fertige Formkörper erhalten werden. Die Vorformlinge können auch ohne nennenswerten Materialverlust außerhalb einer Form gelagert und/oder transportiert werden, bevor man daraus fertige Formkörper herstellt.

Als Material für die Form zur Erhitzung des Vorformlings auf über 180°C hat sich Stahl bewährt. Es sind hierfür aber auch andere Materialien geeignet, insbesondere andere Metalle sowie Glas, Keramik und Kunststoffe. Letztere sind bevorzugt, wenn die Erhitzung mit Mikrowellen vorgenommen werden soll. Zweckmäßigerweise werden geschlossene Formen verwendet, die jedoch das Entweichen von Gasen ermöglichen.

Es hat sich als zweckmäßig erwiesen, die Formenwände mit Trennmitteln zu versehen, z.B. mit Talkum, Graphit, Stärkelösungen, Aluminium- oder Kupferfolien, Papier, Baumwollgeweben oder Zellwollvliesen.

Die Erhitzung selbst kann z.B. durch Strahlung, induktiv, durch Wechselspannung, durch Heizflüssigkeiten oder Heizgase, z.B. in einem Ofen erfolgen, in den die Formen eingestellt werden, die die Vorformlinge enthalten.

Die Erhitzung zur Herstellung der Formkörper erfolgt auf Temperaturen über 180°C. Normalerweise erfolgt die Erhitzung auf Temperaturen von nicht mehr als 900°C, vorzugsweise auf Temperaturen von nicht mehr als 800°C. Im allgemeinen kann man mit Expansionstemperaturen zwischen 200 und 600°C gute Ergebnisse erzielen. Die bevorzugt einzusetzenden SOₓ- und NOₓ-Blähgraphite haben bei 600°C im allgemeinen ihr Expansionsmaximum erreicht. Wenn man Formteile herstellen will, die als solche noch expansionsfähig sind, ist es vorteilhaft, bei Temperaturen von unter 400°C zu expandieren.

Die so erhältlichen Formkörper haben Raumgewichte von beispielsweise 0,01 bis 0,6 g/cm³, vorzugsweise von 0,05 bis 0,45 g/cm³.

Die erfindungsgemäß herstellbaren Formkörper aus expandiertem Blähgraphit oder diesen enthaltenden Mischungen können dort Verwendung finden, wo leichtes Gewicht mit hoher Temperaturstabilität, guter elektrischer Leitfähigkeit, guter elektromagnetischer Abschirmung, vorteilhaftem Brandverhalten und/oder mechanischer Stabilität zu kombinieren ist. Als Beispiele seien genannt: Fahrzeugbau, Flugzeugbau, Raketenbau, Möbelbau, Behälterbau, (vorbeugenden) Brandschutz, Vorrichtungen für moderate Strom- und/oder Wärmeableitung, -zuleitung und -übertragung, Vorrichtungen für Wärmeisolation und Schalldämpfung, der Bau von Heizungsanlagen und Wärmeaustauschervorrichtungen, der Bau von chemikalienresistenten Anlagen und stoßabsorbierenden Vorrichtungen und der Bau vor Vorrichtungen für die Reflexion und/oder Absorption von elektromagnetischen Wellen.

Das erfindungsgemäße Verfahren weist eine Reihe von Vorteilen auf. Es gestattet die Herstellung von Formteilen aus Blähgraphit und Blähgraphit enthaltenden Mischungen, ohne daß die Blähgraphit-Teilchen in der letzten Verfahrensstufe weite Expansionswege zurücklegen müssen. Auch bei komplizierten Formen kann erreicht werden, daß diese vor und/oder nach dem Expansionsprozeß vollständig gefüllt sind. Die Raumgewichtsverteilung der so hergestellten Formkörper und damit die Isotropie der Eigenschaften dieser Formkörper kann gegenüber Formkörpern, die nach konventionellen Methoden hergestellt wurden, stark verbessert werden. Das erfindungsgemäße Verfahren gestattet auch, eine Vielzahl beliebiger Zusatzstoffe relativ gleichmäßig oder gezielt an bestimmten Stellen des Formkörpers anzuordnen. Der ursprünglich eingesetzte Blähgraphit rieselt nicht mehr weg, sobald der Vorformling entstanden ist.

### Beispiele

Im folgenden wird die Erfindung beispielhaft dargestellt. Die angegebenen Teile und Prozente beziehen sich auf das Gewicht, sofern nichts anderes vermerkt ist.

Als Blähgraphit wurde in den Beispielen ein handelsüblicher SOₓ-Blähgraphit verwendet, der einen mittleren größten Korndurchmesser von 2,5 mm, eine Blähfähigkeit von mehr als 500 Vol.-%, einen Schwefelgehalt von 2,9 Gew.-% und ein Schüttgewicht von 700 g/l aufwies.

### Beispiel 1

In einem Stahlgefäß, das langsam mit einem wandgängigen Rührer gerührt wurde, wurde Blähgraphit auf 295°C erhitzt. Hier expandierte er zu einer rieselfähigen, staubenden Masse mit einem Schüttgewicht von 60 g/l.

Dieses Material wurde in eine Holzform mit 10 x 10 x 10 cm Innenmaß bündig eingefüllt und mit einem Stempel bei 22°C von der Füllhöhe 10 cm auf eine Füllhöhe von 6 cm komprimiert. Dann wurde der Form ein zusammenhängend handhabbarer Vorformling mit den Abmessungen 10 x 10 x 6 cm mit einem Raumgewicht von 100 g/l entnommen.

Dieser Vorformling wurde in eine aus Stahlplatten zusammengesetzte, an den Fugen gasdurchlässige Expansionsform eingelegt, die Innenmaße von 10 x 10 x 6 cm aufwies und deren Wände talkumiert waren. Man erhitzte im Ofen auf 600°C und erhielt eine stabile, gegenüber dem Vorformling erheblich abriebfestere Formplatte mit einem Raumgewicht ca. 100 g/l.

### Beispiel 2

Es wurde analog Beispiel 1 verfahren, jedoch wurde der Blähgraphit bei 255°C vorexpandiert und so ein Vorexpandat mit einem Schüttgewicht von 100 g/l erhalten.

Dieses Vorexpandat wurde in der gleichen Holzform, jedoch auf eine Füllhöhe von 3 cm komprimiert, wobei sich aus dem pulverig staubenden Vorexpandat ein handhabbarer Vorformling bildete, der ohne wesentliche Materialverluste aus der Form entnommen werden konnte. Der Vorformling wurde in die Expansionsform eingelegt, die auf 3 cm Höhe eingestellt wurde und in die zwei Papierdeckblätter eingelegt waren. Man erhitzte im Ofen auf 650°C. Nach dem Abkühlen lag ein sehr stabiler, dicht strukturierter Formkörper mit glatten Deckschichten aus Papierpyrolysat vor.

### Beispiel 3

1000 Teile Blähgraphit wurden in einem Kneter mit 372 Teilen einer 80 %igen wässrigen Lösung des Umsetzungsproduktes aus 1 Mol Aluminiumhydroxid und 3 Mol H₃PO₄ vermischt. Dann wurden 119 Teile Ethanolamin hinzugefügt, wobei Erwärmung durch die Neutralisationsreaktion eintrat. Nach Abkühlung, Trocknung und Zerkleinerung erhielt man ein rieselfähiges Granulat aus einem mit dem Phosphat beschichteten Blähgraphit. Das Phosphat ist zugleich Bindemittel und Oxydationsstabilisator. Dieses Granulat wurde wie in Beispiel 1 beschrieben in ein Vorexpandat übergeführt. Bei einer Temperatur von bereits 215°C wurde ein Vorexpandat mit einem Schüttgewicht von 100 g/l erhalten.

Mit diesem Vorexpandat wurde eine Stahlform mit den Innenmaßen 10 x 10 x 10 cm beschickt, wobei die Boden- und Deckfläche mit Aluminiumfolie bedeckt wurde. Dann wurde auf 150°C erhitzt und mittels eines auf die obere Aluminium-Folie aufliegenden Stempels von einer Füllhöhe von 10 cm auf 5 cm komprimiert. Nach dem Abkühlen wurde aus der Preßvorrichtung ein ohne Materialverlust handhabbarer Vorformling entnommen, dessen Raumgewicht 0,20 g/cm³ (nach Abzug der Aluminiumdeckfolie) betrug.

Dieser Vorformling wurde in eine aus stabilen Stahlplatten gebaute, an den Fugen gasdurchläßige Form mit den Innenmaßen 10 x 10 x 5 cm eingelegt und nach Verschließen der Form auf 550°C erhitzt. Man erhielt einen feinstrukturierten plattenförmigen Formkörper, dessen Raumgewicht bei 0,2 g/cm³ lag und der eine Eindruckfestigkeit von 24 kg/cm² aufwies. Die Eindruckfestigkeit des Vorformlings ohne Aluminiumdeckschicht hatte bei 6 kg/cm² gelegen.

### Beispiel 4

100 Teile des gemäß Beispiel 3 erhaltenen Vorexpandates wurden mit 100 Teile voll expandiertem handelsüblichen Vermikulit (Schüttgewicht 200 g/l) der Körnung 2 gut vermischt und in einer Form analog Beispiel 3 von einer Füllhöhe von 10 cm auf 5 cm komprimiert. Hierbei erhielt man einen handhabbaren Vorformling, der in einer 5 cm-Plattenform analog Beispiel 3 auf 600 °C erhitzt wurde. Man erhielt einen stabilen Formkörper mit einem Raumgewicht von 0,3 g/cm³.

### Beispiel 5

Es wurde wie in Beispiel 4 gearbeitet, jedoch anstelle von Vermikulit eine aus Hohlkugeln mit max, 0,7 mm Durchmesser bestehende Fraktion einer Alumosilikat-Flugasche mit einem Schüttgewicht von 200 g/l eingesetzt.

Auch in diesem Falle wurde ein handhabbarer Vorformling und ein stabiler Formkörper durch Nacherhitzen auf 600°C erhalten.

### Beispiel 6

Das gemäß Beispiel 1 erhaltene Vorexpandat (70 Gew.-%) wurde mit einer handelsüblichen kationischen Bitumenemulsion (30 Gew.-%) mit einem Feststoffgehalt von 30 Gew.-% unter Rühren besprüht. Es bildete sich ein feuchtes, rieselfähiges Gemisch, das in einer Holzform gemäß Beispiel 1 von einer Schütthöhe von 10 cm auf 5 cm komprimiert wurde. Man erhielt einen sehr gut handhabbaren Vorformling. Dieser wurde ohne zu trocknen in einer Stahlform gemäß Beispiel 1 bei 600°C unter Expansion von 5 auf 6 cm Höhe zu einem stabilen Formkörper (Platte) verarbeitet. Die erhaltene Platte hatte ein Raumgewicht von 0,09 g/cm³ und eine Eindruckfestigkeit von 11 kg/cm².

### Beispiel 7

Es wurde wie bei Beispiel 6 gearbeitet, jedoch wurde anstelle der Bitumenemulsion eine 30 Gew.-%ige wässrige Lösung von sek. Ammoniumphosphat verwendet. Die letztlich erhaltene Platte hatte ein Raumgewicht von 0,09 g/cm³ und eine Eindruckfestigkeit von 8,5 kg/cm².

### Beispiel 8

Ein wie in Beispiel 3 hergestelltes Blähgraphitgranulat wurde unter langsamen Rühren bei 300°C zu einem Vorexpandat mit einem Schüttgewicht von 30 g/l umgewandelt. In einer Stahlform gemäß Beispiel 3 wurde das Vorexpandat von 10 cm Füllhöhe auf 1 cm Füllhöhe komprimiert. Hierbei entstand ein relativ stabiler, gut handhabbarer Vorformling.

Dann wurde aus dem gleichen Blähgraphit bei 215°C ein Vorexpandat mit einem Schüttgewicht von 100 g/l hergestellt und von einer Schütthöhe von 10 cm auf 6 cm komprimiert. Man erhielt auch hierbei einen handhabbaren formstabilen Vorformling.

Dann wurden beide Vorformlinge übereinander in die stabile auf 7 cm Höhe eingestellte Stahlform entsprechend Beispiel 3 eingelegt, so daß eine Art Sandwich: Aluminiumfolie, Vorformling 1, Vorformling 2, Aluminiumfolie entstand. Die geschlossene Form wurde auf 600°C erhitzt (15 Min Standzeit bei 600°C) und nach dem Abkühlen ein stabiler Sandwich mit haftenden Aluminiumdeckschichten und asymetrischer Raumgewichtsverteilung entnommen. Die Raumgewichte der beiden Schichten betrugen 0,3 bzw. 0,16 g/cm³.

Der Versuch wurde wiederholt, wobei in die Stahlform zwischen die beiden Vorformlinge in getrennten Ansätzen Papier, Bitumenpappe, Baumwollgewebe und Mineralgewebe eingelegt wurde. Die Raumgewichtsverteilung im fertigen Formkörper blieb nahezu unverändert. In allen Fällen waren Sandwichs entstanden mit gutem Verbund zwischen den Bestandteilen.

### Beispiel 9

Ein sinusförmig in Wellenform gebogenes Stahlrohr ist so angeordnet, daß es durch einen länglichen Kasten aus Stahlblech, der die wellenförmige Biegung einhüllt, hindurchgeführt wird. In der Ebene der Wellenform ist der umgebende Kasten hälftig geteilt, so daß er das gebogene Rohr wie eine Schachtel, die geöffnet werden kann, umschließt. Das nicht vom Rohr eingenommene Volumen des Kastens soll mit einer expandierten Blähgraphitfüllung ausgefüllt werden.

Zu diesen Zweck wurde das Vorexpandat gemäß Beispiel 3 verwendet. Beide Kastenhäften wurden überschüssig mittels einer Hilfsform mit dem Vorexpandat gefüllt, dann wurde das Vorexpandat durch einen entsprechend geformten Stempel in dem Kasten um 30 Vol % komprimiert. Dabei wurden die beiden Kastenhäften bündig gefüllt. Hierbei entstand ein Vorformling in der Expansionsform, d.h. dem das Rohr umgebenden Stahlkasten. Die beiden Kastenhäften konnten dann bewegt und um alle Achsen gedreht werden, ohne daß das Vorexpandat herausrieselte. Nun wurde das gewendelte Rohr in die vorgesehene Position auf die eine gefüllte Kastenhäfte gelegt und die andere Kastenhälfte in die dafür bestimmte Position darübergesetzt. Durch weiteren Druck wurde der Kasten geschlossen, wobei sich das Rohr in die in den Kastenhäften befindlichen Vorformlinge paßgenau eindrückte. Nun wurden die beiden gefüllten Kastenhälften mit Falzverbindungen durch die noch Gase austreten konnten, verschlossen.

Die so vorbereitete Konstruktion wurde auf 600°C geheizt. Das geschah mit Heizgasen, die durch das gewendelte Rohr geschickt wurden. Durch die Restexpansion des Kasteninhalts wurden beide Häften der Füllung verbunden und der ursprüngliche Vorformling in ein stabiles, rüttelfestes Formteil umgewandelt, das den Freiraum zwischen Wendelrohr und Kastenwand voll und schlüssig ausfüllte. Derartige Konstruktionen können bei der Abgasableitung von Verbrennungsmaschinen verwendet werden.

### Beispiel 10

Aus dem Granulat gemäß Beispiel 3 wurde bei 228°C ein Vorexpandat mit dem Raumgewicht 50 g/l hergestellt.

Auf einer Preßvorrichtung wurden aus dem Vorexpandat unter 50 %iger Volumenkompression Kugeln mit einem mittleren Durchmesser von 5 mm hergestellt. Diese Kugeln hatten den Vorteil, nicht zu stauben und gut handhabbar zu sein. Sie wurden in ein Rohr aus Keramikmaterial mit einem Durchmesser von 6 mm eingefüllt. Das so gefüllte Rohr wurde beidseitig mit einem Pfropfen aus Schamottewolle verschlossen und auf 600°C gebracht. Es war danach, wie ein Schnitt durch das Rohr zeigte, sehr homogen mit der elektrisch leitenden Füllung aus expandiertem Blähgraphit ausgefüllt und kann als Heizelement dienen.

Derartige Kugeln wurden auch in die Expansionsform gemäß Beispiel 3 eingefüllt, und so bei 600°C plattenförmige Formkörper erhalten.

### Beispiel 11

Der gemäß Beispiel 3 erhaltene Vorformling wurde in der dort beschriebenen stabilen Expansionsform nicht auf 550°C, sondern nur auf 300°C geheizt. So wurde ein stabiler, fein strukturierter Formkörper mit einer Eindruckfestigkeit von 18 kg/cm² erhalten. Dieser Formkörper hatte jedoch die für die Erstellung von z.B. Kabelschotts im Brandschutzbereich interessante Eigenschaft, bei Beflammung noch stark expandieren zu können (= intumeszenter Charakter).

## Patentansprüche

1. Verfahren zur Herstellung von Formkörpern aus Blähgraphit, dadurch gekennzeichnet, daß man Blähgraphit zunächst in ein Vorexpandat überführt, dieses in einer Preßvorrichtung bei Temperaturen unter 180°C zu Vorformlingen verpreßt und aus diesen Vorformlingen durch Erhitzen in Formen auf Temperaturen über 180°C Formkörper herstellt.

2. Verfahren nach Anspruch 1, dadurch gekennzeichnet, daß man Blähgraphite zusammen mit Hilfsstoffen einsetzt.

3. Verfahren nach Ansprüchen 1 und 2, dadurch gekennzeichnet, daß die Blähgraphite und/oder die daraus herzustellenden Vorexpandate mit Perliten, Vermikuliten, blähfähigen Gläsern, Glimmern, Tonen, Borsilikaten, Koksen, Holzkohlen, Steinkohlen, Braunkohlen, Graphitgranulaten, Korkgranulaten, Holzgranulaten, Getreidekörnern, Kork, Rindengranulaten, Blähton, Schaumbeton, Metallschwämmen, Bims, Tuffen und/oder Lava vermischt werden.

4. Verfahren nach Ansprüchen 1 bis 3, dadurch gekennzeichnet, daß man den Blähgraphiten und/oder den daraus herzustellenden Vorexpandaten Metallpulver, Metallspäne, Metallfäden, Gesteinsmehle, Gläser, Emaillfritten, Kreide, Dolomit, Kaolin, Quarz, Oxide und Hydroxide des Calciums, Magnesiums, Aluminiums und/oder Eisens, Phosphate, Silikate, Aluminate, Zemente, Gipse, Schlacken, Flugaschen, Kohlen, Kokse, Cellulose, Knochen-, Holz-, Rinden-, Früchte-, Fruchtschalen-, Heu- und/oder Stroh-Zerkleinerungsprodukte, Getreidefruchtkörner, organische und/oder anorganische Salze, nichtionische, kationische und/oder anionische Monomere, Oligomere und/oder Polymere, Kohlenwasserstoffe, Kohlenwasserstoffabkömmlinge, Glykole, Polyole, Polyether, Polyester, natürliche und/oder synthetische Polyamide, Proteine, Kaseine, Chitine, natürliche und/oder synthetische Kautschuke, andere Elastomere, Homo- und/oder Copolymerisate ungesättigter Kohlenwasserstoffverbindungen, Polyurethane, Phenolharze, Furanharze, Harnstoffharze, Melamin-Formaldehyd-Harze, Epoxidharze, ungesättigte Polyesterharze, Polysulfidharze und/oder Polyimidharze zufügt.

5. Verfahren nach Ansprüchen 1 bis 4, dadurch gekennzeichnet, daß man die Vorexpansion des Blähgraphits bei Temperaturen im Bereich 180 bis 450°C durchführt.

6. Verfahren nach Ansprüchen 1 bis 5, dadurch gekennzeichnet, daß man die Verpressung des Vorexpandates bei 10 bis 150°C so vornimmt, daß das Volumen um 20 bis 90 % abnimmt.

7. Verfahren nach Ansprüchen 1 bis 6, dadurch gekennzeichnet, daß die Abmessungen des Vorformlings denen des fertigen Formkörpers möglichst weitgehend entsprechen und beim abschließenden Erhitzen im wesentlichen nur noch eine verfestigende Verdichtung erfolgt.

8. Verfahren nach Ansprüchen 1 bis 7, dadurch gekennzeichnet, daß die Herstellung der Formkörper bei 200 bis 600°C erfolgt.

## Claims

1. Process for the production of mouldings from expandable graphite, characterised in that expandable graphite is first converted into a pre-expanded form, the latter is compression moulded in a compression moulding apparatus at temperatures below 180°C to give preforms and mouldings are produced from these preforms by heating in moulds to temperatures above 180°C.

2. Process according to Claim 1, characterised in that expandable graphites are used together with auxiliaries.

3. Process according to Claims 1 and 2, characterised in that the expandable graphites and/or the pre-expanded forms to be produced therefrom are mixed with perlites, vermiculites, expandable glasses, micas, clays, borosilicates, cokes, charcoals, hard coals, brown coals, graphite granules, cork granules, wood granules, cereal grains, cork, bark granules, expandable clay, foam concrete, metal sponges, pumice, tuffs and/or lava.

4. Process according to Claims 1 to 3, characterised in that metal powders, metal chips, metal filaments, ground minerals, glasses, enamel frits, chalk, dolomite, kaolin, quartz, oxides and hydroxides of calcium, of magnesium, of aluminium and/or of iron, phosphates, silicates, aluminates, cements, gypsums, slags, fly ashes, coals, cokes, cellulose, bone, wood, bark, fruit, peel, hay and/or straw comminution products, cereal grains, organic and/or inorganic salts, nonionic, cationic and/or anionic monomers, oligomers and/or polymers, hydrocarbons, hydrocarbon derivatives, glycols, polyols, polyethers, polyesters, natural and/or synthetic polyamides, proteins, caseins, chitins, natural and/or synthetic rubbers, other elastomers, homo- and/or copolymers of unsaturated hydrocarbon compounds, polyurethanes, phenol resins, furan resins, urea resins, melamine/formaldehyde resins, epoxy resins, unsaturated polyester resins, polysulphide resins and/or polyamide resins are added to the expandable graphites and/or to the pre-expanded forms to be produced therefrom.

5. Process according to Claims 1 to 4, characterised in that the pre-expansion of the expandable graphite is carried out at temperatures in the range from 180 to 450°C.

6. Process according to Claims 1 to 5, characterised in that the compression moulding of the pre-expanded form is carried out at 10 to 150°C in such a way that the volume decreases by 20 to 90%.

7. Process according to Claims 1 to 6, characterised in that the dimensions of the preform correspond as substantially as possible to those of the finished moulding, and essentially only compaction is effected in the final heating.

8. Process according to Claims 1 to 7, characterised in that the production of the mouldings is carried out at 200 to 600°C.

## Revendications

1. Procédé pour la préparation de corps moulés en graphite expansé, caractérisé en ce que le graphite expansé est d'abord transformé en un produit d'expansion préalable, celui-ci est comprimé en des préformes dans un dispositif de compression à des températures inférieures à 180 °C et ces préformes servent à la préparation de corps moulés en portant la température des moules au-delà de 180 °C.

2. Procédé selon la revendication 1, caractérisé en ce que les graphites expansés sont mis en oeuvre conjointement avec des adjuvants.

3. Procédé selon les revendications 1 et 2, caractérisé en ce que les graphites expansés et/ou les produits d'expansion préalables à préparer à partir de ceux-ci sont mélangés avec des perlites, des vermiculites, des verres expansibles, des micas, des argiles, des borosilicates, des cokes, des charbons de bois, des houilles, des lignites, des granulats graphitiques, des granulats de liège, des granulats de bois, des grains de céréales, du liège, des granulats d'écorce, de l'argile expansée, du béton mousse, des éponges de métal, des pierres ponces, des tufs et/ou de la lave.

4. Procédé selon les revendications 1 à 3, caractérisé en ce que les graphites expansés et/ou les produits d'expansion préalables à préparer à partir de ceux-ci sont additionnés de poudre de métal, de copeaux métalliques, de filaments métalliques, de fines de roches, de verres, de frittes d'émail, de craie, de dolomite, de kaolin, de quartz, d'oxydes et d'hydroxydes de calcium, de magnésium, d'aluminium et/ou de fer, de phosphates, de silicates, d'aluminates, de ciments, de gypses, de scories, de suies, de charbons, de cokes, de cellulose, de broyats d'os, de bois, d'écorce, de fruits, de pelures, de foin et de paille et de grains de maïs, de millet et de céréales des types les plus divers, de sels organiques et/ou anorganiques, de monomères, d'oligomères et/ou de polymères non ioniques, cationiques et/ou anioniques, d'hydrocarbures et leurs dérivés, de glycols, de polyols, de polyéthers, de polyesters, de polyamides naturels et/ou synthétiques, de protéines, de caséines, de chitines, de caoutchoucs naturels et/ou synthétiques, d'autres élastomères, d'homopolymérisats et/ou de copolymérisats de composés d'hydrocarbure insaturés , de polyuréthannes, de résines phénoliques, de résines furaniques, de résines d'urée, de résines mélamine-formaldéhyde, de résines époxy, de résines polyester insaturées, de résines de polysulfure et/ou de résines de polyimide.

5. Procédé selon les revendications 1 à 4, caractérisé en ce que l'expansion préalable du graphite expansé est réalisée à des températures de l'ordre de 180 à 450 °C.

6. Procédé selon les revendications 1 à 5, caractérisé en ce que la compression du produit d'expansion préalable a lieu à des températures de 10 à 150 °C, de sorte que le volume diminue de 20 à 90 %.

7. Procédé selon les revendications 1 à 6, caractérisé en ce que les dimensions de la préforme correspondent le plus exactement possible à celles du corps moulé fini et que le chauffage final ne donne encore lieu essentiellement qu'à une compression compactée.

8. Procédé selon les revendications 1 à 7, caractérisé en ce que la préparation des corps moulés s'opère entre 200 et 600 °C.
